# Europäisches Patentamt

(19) **European Patent Office**

**Office européen des brevets**

(11) Veröffentlichungsnummer: **0 132 584**

**B1**

(12) **EUROPÄISCHE PATENTSCHRIFT**

(45) Veröffentlichungstag der Patentschrift:
23.06.89

(21) Anmeldenummer: **84107036.0**

(22) Anmeldetag: **19.06.84**

(51) Int. Cl.⁴: **F 23 C  6/04,** F 23 J  15/00,
F 23 L  15/04, B 01 D  53/36,
F 22 B  31/04, F 23 N  5/00

(54) **Verfahren und Anlage zum Vermindern der Schadstoffemissionen in Rauchgasen von Feuerungsanlagen.**

(30) Priorität: 20.07.83 DE 3326100
13.08.83 DE 3329337
01.09.83 DE 3331545

(43) Veröffentlichungstag der Anmeldung:
**13.02.85 Patentblatt 85/7**

(45) Bekanntmachung des Hinweises auf die Patenterteilung:
**23.06.89 Patentblatt 89/34**

(84) Benannte Vertragsstaaten:
**AT BE FR GB NL SE**

(56) Entgegenhaltungen:
**DE-A-1 068 176
DE-A-2 658 208
DE-A-2 919 812
DE-A-2 951 104
DE-A-3 110 361
DE-A-3 215 073
DE-A-3 240 553
GB-A-232 091
GB-A-1 544 169
GB-A-2 037 607
US-A-3 463 599
US-A-4 128 506
US-A-4 395 223
US-A-4 444 128

IRON AND STEEL ENGINEER, Band 41, Nr. 5, Mai**

(73) Patentinhaber: **Ferdinand Lentjes Dampfkessel-
und Maschinenbau, Hansa- Allee 304, D-4000
Düsseldorf/Oberkassel (DE)**

(72) Erfinder: **Kraus, Willibald, Dipl.- Ing., verstorben
(DE)**

(74) Vertreter: **König, Reimar, Dr.- Ing., Patentanwälte
Dr.- Ing. Reimar König Dipl.- Ing. Klaus Bergen
Wilhelm- Tell- Strasse 14 Postfach 260162, D-4000
Düsseldorf 1 (DE)**

(56) Entgegenhaltungen: (Fortsetzung)
**1964, Seite 167, Pittsburgh, US; "System eliminates
solids and sulphur fumes from stack discharge"
idem**

**Beschreibung**

Die Erfindung betrifft ein Verfahren und eine Anlage zum Vermindern der Schadstoffemissionen im Rauchgas von Feuerungsanlagen mit Wärmetauschern durch Verbrennen von schwefel- und aschehaltigem Brennstoff mit Luftüberschuß und Erzeugen von etwa 85 % der erforderlichen Leistung in einer ersten Stufe und Verbrennen eines aschefreien und gegebenenfalls schwefelhaltigen Brennstoffs im stöchiometrischen Bereich mit dem Restsauerstoff des Rauchgases der ersten Stufe und Erzeugen des Rests der thermischen Leistung in einer zweiten, nachgeordneten Stufe und durch katalytische Umwandlung der Schwefeloxyde sowie der Stickoxyde in unschädliche und/oder entsorgbare Verbindungen nach einer Entstaubung der Rauchgase.

Ein derartiges Verfahren und eine solche Anlage sind in der deutschen Offenlegungsschrift 2 658 208 beschrieben. In einer Feuerungsanlage wird dabei Kohlenstaub mit einem Luftüberschuß von 10 bis 20 % verbrannt. Dieser Luftüberschuß wird durch Zufuhr eines Kohlenwasserstoffs, insbesondere Erdgas, in die Feuerungsanlage herabgesetzt, so daß sich nur noch ein leichter Sauerstoffüberschuß oder auch ein leichter Sauerstoffunterschuß ergibt. Hierbei werden ohne die Anwesenheit eines Katalysators teilweise die Stickoxyde in Stickstoff und Ammoniak sowie das Schwefeldioxyd in Schwefelwasserstoff umgewandelt. Danach werden die Rauchgase entstaubt und über einen Katalysator geleitet, in dem der Restgehalt an Stickoxyden und Schwefeldioxyd zu Stickstoff bzw. Ammoniak und Schwefelwasserstoff umgewandelt wird. Der Schwefelwasserstoff wird anschließend aus den Rauchgasen extrahiert und zu elementarem Schwefel weiterverarbeitet. Geringe Mengen an Ammoniak verbleiben im Rauchgas und werden über einen Kamin in die Atmosphäre abgeführt.

Bei diesem bekannten Verfahren ist es nachteilig, daß sich Ammoniumsulfat bilden kann, das sich auf dem Katalysator zur Umwandlung der in den Rauchgasen enthaltenen Schwefeloxyde in Schwefelwasserstoff niederschlagen und diesen kontaminieren kann, daß Ammoniak in den Rauchgasen verbleibt und über den Kamin in die Atmosphäre gelangt, daß die Extraktion des Schwefelwasserstoffs und die Weiterverarbeitung aufwendig sind und daß die katalytische Reduktion der Schwefeloxyde zu Schwefelwasserstoff ein endothermer Vorgang ist, so daß Wärmeenergie aus den Rauchgasen verbraucht wird, die für die thermische Leistung der Anlage verloren geht.

In "Iron and Steel Eng.", Band 41, Nr. 5, 1964, Seite 167, ist ein Dampfkraftwerk mit einer Feuerungsanlage beschrieben, in der schwefelhaltiger Kohlenstaub verbrannt wird. Nach einem Entstauber für die Rauchgase ist ein Oxydationskatalysator angeordnet, der Schwefeldioxyd zu Schwefeltrioxyd aufoxydiert. Danach werden die Rauchgase mit dem Schwefeltrioxyd durch einen Luftvorwärmer geleitet, in dem sich die Rauchgase so weit abkühlen, daß sich das Schwefeldioxyd mit Wasserdampf zu Schwefelsäure verbindet und auskondensiert. Die auskondensierte Schwefelsäure wird abgezogen, und die weitgehend schwefelfreien Rauchgase werden über einen Kamin in die Atmosphäre geleitet. Die Feuerungsanlage wird in üblicher Weise mit erheblichem Luftüberschuß betrieben und es entstehen Stickoxyde, die aus den Rauchgasen nicht entfernt werden.

Der Erfindung liegt die Aufgabe zugrunde, die vorerwähnten Nachteile zu beseitigen und ein Verfahren und eine Anlage zum Vermindern der Schadstoffemissionen im Rauchgas von Feuerungsanlagen zu schaffen, die eine katalytische Beseitigung der Stickoxyde ohne Zufuhr von Fremdstoffen und unter Berücksichtigung der Gegebenheiten der Brennstoffverbrennung in Feuerungsanlagen, insbesondere Dampferzeugungsanlagen, erlauben. Dabei soll die Verbrennung in beiden Stufen in üblicher Weise möglichst vollständig und mit möglichst hohen Verbrennungstemperaturen ablaufen, um hohe Anlagewirkungsgrade und niedrige Anlagekosten zu gewährleisten.

Des weiteren soll sich der Wärmegewinn der Oxydation von Schwefeldioxyd zu Schwefeltrioxyd für die Verbesserung des Wirkungsgrades der Anlage nutzbar machen lassen und gleichzeitig ein weitestgehend schwefelfreies Abgas anfallen.

Diese Aufgabe wird dadurch gelöst, daß bei einem Verfahren der eingangs erwähnten Art erfindungsgemäß das Entstauben nach der ersten Stufe erfolgt, daß die Verbrennung in der zweiten Stufe durch einen Oxydationskatalysator katalytisch erfolgt und sich daran eine katalytische Reduktion durch einen Reduktionskatalysator der Stickoxyde zu Stickstoff anschließt, daß nach dem Entstauben eine weitere katalytische Aufoxydation des Schwefeldioxyds zu Schwefeltrioxyd erfolgt, wobei der weitere Katalysator an einer Stelle im Rauchgasstrom angeordnet ist, wo eine Temperatur von 400 bis 500°C herrscht, und daß Schwefelsäure vor dem Eintritt in einen Kamin durch Kühlen der Rauchgase bis unter den Taupunkt auskondensiert und abgezogen wird.

Das erfindungsgemäße Verfahren macht sich eine an sich bekannte zweistufige Verbrennung zunutze, führt aber die Verbrennung in der zweiten Stufe katalytisch durch, da sich diese ohne Probleme so steuern läßt, daß ausschließlich der Restsauerstoff in den Rauchgasen durch Verbrennung des zugeführten aschefreien Brennstoffs zu Kohlendioxyd und Wasser ohne Bildung von Unverbranntem wie Kohlenmonoxyd und Kohlenwasserstoffe verbraucht wird. Aus diesem Grunde kann sich an die katalytische Verbrennung in der zweiten Stufe unmittelbar eine katalytische Reduktion der Stickoxyde zu Stickstoff anschließen, ohne daß sich dabei Ammoniak bildet. Und weil sich kein Ammoniak bildet, ist die katalytische Aufoxydation des Schwefeldioxyds zu Schwefeltrioxyd möglich, so daß sich nicht nur die sich dabei ergebende Wärmetönung in der Feuerungsanlage nutzen, sondern auch die anfallende Schwefelsäure auf einfachste Weise durch Auskondensieren abziehen läßt. Der zusätzliche apparative Aufwand für eine derartige katalytische

Schwefeldioxydoxidation und zur Kondensation der Schwefelsäure ist äußerst gering. Die Wärmetönung der Schwefeldioxydoxidation läßt sich zusammen mit der katalytischen Oxydation der Rauchgase in der zweiten Stufe vorzugsweise in einem Luftvorwärmer nutzbar machen.

Die nach dem erfindungsgemäßen Verfahren betriebene Feuerungsanlage wird vorzugsweise so geregelt, daß die Brennstoffzufuhr in der ersten Stufe bei im wesentlichen gleichbleibendem Luftüberschuß in Abhängigkeit von der benötigten Leistung und die Brennstoffzufuhr zur zweiten Stufe in Abhängigkeit vom Sauerstoffgehalt der Rauchgase geregelt werden. Dies bedeutet, daß bei einer Verminderung der benötigten Leistung die Brennstoffzufuhr und die Luftzufuhr der ersten Stufe heruntergeregelt werden und daß die Brennstoffzufuhr zur zweiten Stufe so eingestellt wird, daß der Sauerstoff in den Rauchgasen vollständig verbraucht wird.

Der Sauerstoffgehalt der Rauchgase wird vorzugsweise nach der zweiten Stufe mit Hilfe einer $\lambda$-Sonde gemessen.

Der für die katalytische Oxydation des Schwefeldioxyds erforderliche Sauerstoff kann aus dem Luftüberschuß bzw. dem Rauchgas stammen oder auch vor der $SO_2$-Oxydationsstufe in das Rauchgas eingespeist werden. Im einzelnen richtet sich das danach, ob das Schwefeldioxyd vor der Nachverbrennung in der zweiten Stufe oder nach der Stickoxydreduktionsstufe aufoxidiert wird.

Um ein vorzeitiges Kondensieren der aus der Schwefeldioxydoxidation resultierenden Schwefelsäure und damit eine Korrosion der Anlagenteile zu verhindern, sollte die Wassereintrittstemperatur eines Speisewasservorwärmers am kalten Ende der zweiten Feuerungsanlage oberhalb des Taupunkts der Rauchgase liegen. Dies läßt sich beispielsweise dadurch gewährleisten, daß Heißwasser aus einem Speisewasservorwärmer am kalten Ende der ersten Feuerungsanlage in die Zuleitung des Speisewasservorwärmers der zweiten Feuerungsanlage eingespeist wird. Dabei kann ein Teilstrom des Heißwassers über einen in einer Dampftrommel der ersten Feuerungsanlage angeordneten Vorwärmer in die erwähnte Zuleitung eingespeist werden.

Die den Speisewasservorwärmer der zweiten Feuerungsanlage verlassenden Rauchgase werden vorzugsweise in einem rekuperativen Luftvorwärmer bis unter den Taupunkt abgekühlt, um auf diese Weise eine hochkonzentrierte Schwefelsäure aus den Rauchgasen abtrennen zu können.

Das geschieht vorzugsweise durch zweistufiges Abkühlen in dem Luftvorwärmer mit einer oberhalb des Taupunktes liegenden heißen und einer unterhalb des Taupunktes liegenden kalten Stufe, aus der sich dann die kondensierte Schwefelsäure abziehen läßt.

Das erfindungsgemäße Verfahren wird vorzugsweise in einem Dampfkraftwerk durchgeführt mit einem Dampfkessel aus einer mit Luftüberschuß betriebenen Kohlenstaubfeuerung für den überwiegenden Teil der geforderten Leistung als erster Stufe und einer Zufuhr von gasförmigem oder flüssigem Brennstoff in die Rauchgase der ersten Stufe mit Verbrauch des Restsauerstoffs in den Rauchgasen für den Rest der geforderten Leistung als zweiter Stufe, Strahlungsheizflächen, Berührungsheizflächen, einem Luftvorwärmer, einem Entstauber und einem vor dem Luftvorwärmer angeordneten Katalysator zum Umwandeln von Schwefeloxyden und Stickoxyden in unschädliche und/oder entsorgbare Verbindungen und mit einer Vorrichtung zum Abtrennen der Schwefelverbindungen aus den Rauchgasen, bei dem die erste Stufe aus einem ersten Kesselteil mit Verdampferheizflächen, Überhitzerheizflächen, Speisewasservorwärmerheizflächen und einer vom Dampfdruck abhängigen Regelvorrichtung für die Kohlenstaubzufuhr sowie die zweite Stufe aus einem zweiten Kesselteil mit Verdampferheizflächen, Überhitzerheizflächen, Speisewasservorwärmerheizflächen und einer vom Sauerstoffgehalt der Rauchgase abhängigen Regelvorrichtung für die Brennstoffzufuhr besteht, der Entstauber zwischen dem ersten Kesselteil und dem zweiten Kesselteil angeordnet, die Verbrennung in der zweiten Stufe an einem nach der Brennstoffzufuhr angeordneten Oxydationskatalysator und die Reduktion der Stickoxyde an einem nach dem Oxydationskatalysator angeordneten Reduktionskatalysator erfolgen, ein weiterer Oxydationskatalysator für Schwefeldioxyd nach dem Entstauber angeordnet ist und der Luftvorwärmer einen Schwefelsäureabzug aufweist.

Hierbei kann eine $\lambda$-Sonde zwischen dem Oxydationskatalysator und dem Reduktionskatalysator angeordnet sein und die Regelvorrichtung ansteuern.

Die Anwesenheit des für die Schwefeldioxydoxidation erforderlichen Sauerstoffe kann durch mindestens eine zwischen dem Reduktionskatalysator und dem Oxydationskatalysator mündende Luft- bzw. Sauerstoffdüse gewährleistet werden. Dies ist insbesondere dann der Fall, wenn die Verbrennung des Restsauerstoffs in der zweiten Feuerungsanlage stöchiometrisch abläuft. Bei überstöchiometrischer Verbrennung braucht hingegen nur wenig oder gar kein Sauerstoff für die Schwefeldioxydoxidation in das Rauchgas eingespeist zu werden.

Vorzugsweise wird ein multifunktioneller, auf unverbrannte Kohlenwasserstoffe und Kohlenmonoxyd oxidierend und auf Stickoxyde reduzierend wirkender Platin-Rhodium-Katalysator eingesetzt, der baulich in eine Mehrzahl parallel zueinander angeordneter multifunktioneller Drei-Weg-Katalysatoren aufgeteilt ist.

Um das Anspringen des Drei-Weg-Katalysators zu gewährleisten, kann ein Zündbrenner hinter der Brenngaszufuhr angeordnet sein.

Um die Wirksamkeit der Katalysatoren und Heizflächen über einen langen Zeitraum aufrechtzuerhalten, können zwischen und/oder hinter den Katalysatoren Reinigungsbläser angeordnet sein.

Die für die katalytische Schwefeldioxydoxidation erforderliche Reaktionstemperatur läßt sich dadurch einstellen, daß sich zwischen dem Reduktionskatalysator für die Stickoxyde und dem Oxydationskatalysator für das Schwefeldioxyd Heizflächen befinden. Diese Heizflächen entfallen, wenn der Oxydationskatalysator für das Schwefeldioxyd vor dem Reduktionskatalysator für die Stickoxyde und vor der Brennstoffzufuhr der

3

zweiten Feuerungsanlage angeordnet ist. In diesem Falle tritt das Rauchgas in das Katalysatorbett für die Schwefeldioxydoxydation mit wesentlich niedrigerer Temperatur und mit seinem gesamten Restsauerstoffgehalt ein, so daß für die Oxydation des Schwefeldioxyds weder ein Kühlen des Rauchgases noch eine Sauerstoffzufuhr erforderlich ist. Die Brennstoffzufuhr kann dann entsprechend dem Sauerstoffverbrauch bei der Schwefeldioxydoxydation verringert werden. Zusätzlich kann eine Bypass-Regelklappe für die Rauchgase vor den Speisewasservorwärmerheizflächen und eine Rauchgas-Regelklappe im Rauchgaskanal vor dem Eintritt der durch die Bypass-Regelklappe strömenden Rauchgase angeordnet sein.

Die Erfindung wird nachstehend anhand eines in der Zeichnung dargestellten Ausführungsbeispiels des näheren erläutert. In der Zeichnung zeigen:

Fig. 1 ein schematisches Blockbild einer nach dem erfindungsgemäßen Verfahren arbeitenden Anlage,
Fig. 2 die Darstellung einer Kraftwerksdampfkessel-Anlage mit erfindungsgemäßer zweistufiger Verbrennung und zusätzlicher Schwefeldioxydoxydationsstufe,
Fig. 3 ein Schnittbild des in der Kraftwerksanlage gemäß Fig. 2 verwendeten zweiten Kesselteils und
Fig. 4 ein Diagramm der druck- und konzentrationsabhängigen Tau- und Siedelinien für Schwefelsäure-Wasserdampf-Gemische.

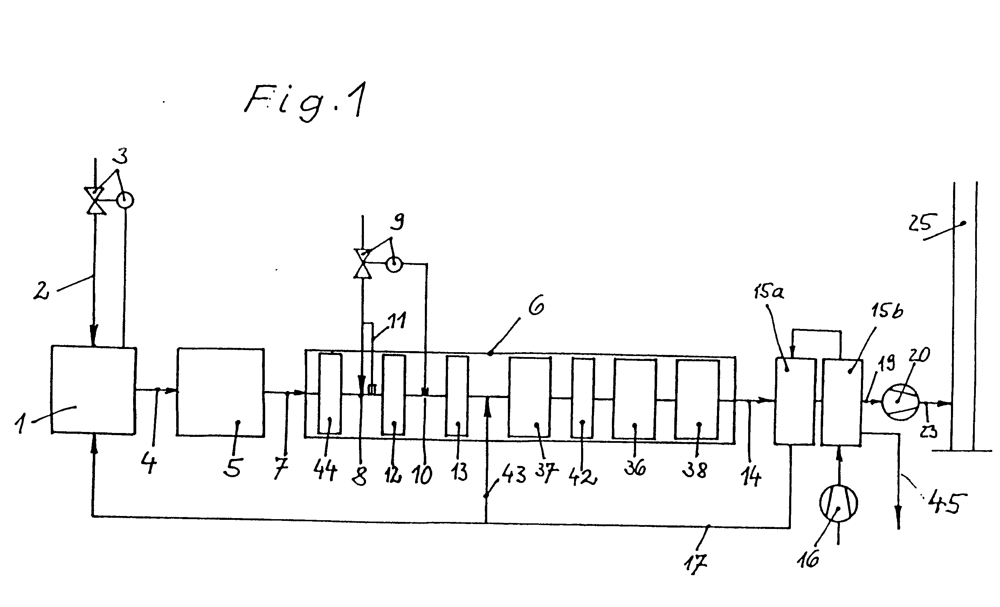

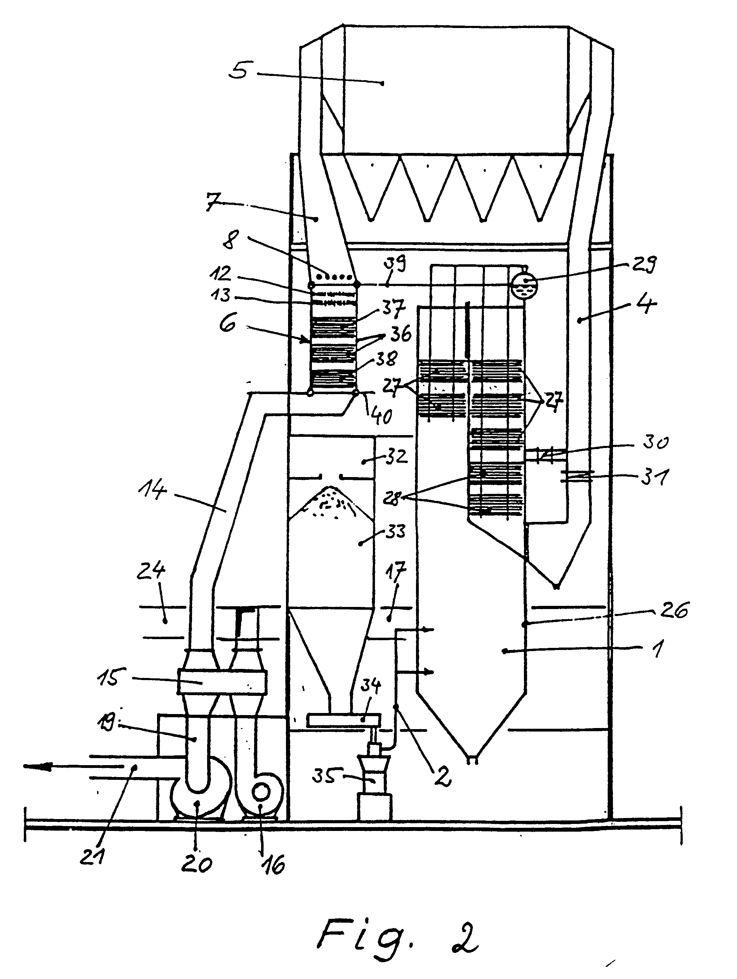

Die schematisch in Fig. 1 dargestellte Anlage bezieht sich auf die in Fig. 2 dargestellte Dampferzeugungsanlage für ein Dampfkraftwerk. Prinzipiell ist eine Anlage nach dem Schema gemäß Fig. 1 jedoch auch als Prozeßdampferzeugungsanlage oder auch als Anlage zur Erzeugung von Fernwärme geeignet.

Einer ersten Feuerungsanlage 1 wird Brennstoff, z. B. als Kohlenstaub über eine Kohlenstaubzufuhr 2 zugeführt. Die Feuerungsanlage 1 wird, wie bei derartigen Feuerungsanlagen üblich, mit einem Luftüberschußfaktor $\lambda$ gleich 1,15 betrieben. In der Feuerungsanlage 1 werden etwa 85 % der benötigten thermischen Leistung erzeugt. Bei einem Dampfkraftwerk wird die Brennstoffzufuhr üblicherweise in Abhängigkeit vom Dampfverbrauch geregelt. Zu diesem Zweck ist ein Regler 3 vorgesehen, der über die Kohlenstaubzufuhr 2 den Dampfdruck in der Anlage konstant hält. Der zugeführte Kohlenstaub wird mit über einen Verbrennungsluftkanal 17 zugeführter vorgewärmter Verbrennungsluft verbrannt, und die Rauchgase gelangen über einen Rauchgaskanal 4 in einen Entstauber 5. Vom Entstauber 5 gelangen die noch etwa 3 % Sauerstoff enthaltenden Rauchgase in eine zweite Feuerungsanlage 6 über einen Rauchgaskanal 7. In der zweiten Feuerungsanlage wird zusätzlicher, weitgehend aschefreier Brennstoff in einer solchen Menge zugeführt, daß der im Rauchgas noch vorhandene Sauerstoff vollständig verbraucht wird. Zu diesem Zweck ist am Eingang der Feuerungsanlage 6 eine Brenngaszufuhr 8 vorgesehen. Statt Brenngas kann jedoch ebensogut ein flüssiger Brennstoff, z. B. Heizöl, eingesetzt werden. Eine $\lambda$-Sonde 10 ist mit einem Regler 9 verbunden, der die zugeführte Brenngasmenge stets so einstellt, daß der gesamte noch im von der ersten Feuerungsanlage 1 kommenden Rauchgas enthaltene Sauerstoff verbraucht wird. Gegebenenfalls kann im Anschluß an die Brenngaszufuhr 8 ein ebenfalls mit Brenngas betriebener Zündbrenner 11 vorgesehen sein.

Die durch die geregelte Brenngaszufuhr erzeugte stöchiometrische Mischung aus Rauchgas mit überschüssigem Sauerstoff und Brenngas wird über einen Oxydationskatalysator 12 geleitet und verbrennt hier vollständig zu $CO_2$ und $H_2O$. Der Oxydationskatalysator ist vorzugsweise auf der Basis Platin-Palladium erstellt. Die $\lambda$-Sonde 10 ist nach dem Oxydationskatalysator 12 in einem Bereich, wo die Verbrennung des Brenngases abgeschlossen ist, angeordnet. Die im Rauchgas enthaltenen Schadstoffkomponenten: unverbrannte Kohlenwasserstoffe, Kohlenmonoxyd und Stickoxyde werden katalytisch in einem Reduktionskatalysator in Kohlendioxyd, Wasserdampf und Stickstoff umgewandelt. Hierzu ist der Reduktionskatalysator 13 als multifunktioneller Platin-Rhodium-Dreiwegkatalysator ausgebildet.

Entsprechend der in den Rauchgasen aus der ersten Feuerungsanlage 1 enthaltenen Sauerstoffmenge kann in der zweiten Feuerungsanlage 6 etwa 15 % der gesamten thermischen Leistung erzeugt werden. Ein Oxydationskatalysator 44 bzw. 42 für das Schwefeldioxyd kann entweder vor der Brenngaszufuhr 8 oder nach dem Reduktionskatalysator 13 für die Stickoxyde angeordnet sein und ist vorzugsweise ein Platin-Palladium-Katalysator. Das entstehende Schwefeltrioxyd setzt sich mit dem in den Rauchgasen enthaltenen Wasserdampf nahezu quantitativ zu Schwefelsäure um.

Beim Verlassen des multifunktionellen Katalysators 13 ist das Rauchgas vollständig ausgebrannt und enthält als Schadstoffe lediglich noch $SO_2$ und $SO_3$. Dieses Rauchgas mit einer Temperatur von etwa 680° C wird nun über die Überhitzerheizflächen 36, Verdampferheizflächen 37 und Speisewasservorwärmerheizflächen 38 geleitet, wo es auf die prozeßintern gewünschte Rauchgastemperatur vor dem Eintritt in den Luftvorwärmer 15a, 15b abgekühlt wird. Ist der Oxydationskatalysator 42 hinter dem Reduktionskatalysator 13 angeordnet, befinden sich in Strömungsrichtung vor dem Oxydationskatalysator 42 drei Düsen 43, über die der für die Schwefeldioxydoxydation ggf. erforderliche Sauerstoff in das Rauchgas eingespeist wird, sofern die Oxydation mittels des Katalysators 12 nicht so gesteuert wird, daß das Rauchgas noch genügend Sauerstoff enthält. Des weiteren sind in Strömungsrichtung vor dem Oxydationskatalysator 42 Überhitzerheizflächen 37 angeordnet, mit denen sich die Rauchgastemperatur auf die für die Schwefeldioxydoxydation erforderliche Temperatur von 400 bis 500° C bringen läßt.

Alternativ kann der Oxydationskatalysator 44 für das Schwefeldioxyd jedoch auch in Strömungsrichtung vor dem Oxydationskatalysator 12 angeordnet sein. In diesem Falle bedarf es angesichts des Sauerstoffgehalts des Rauchgases keiner Sauerstoffzufuhr. Die Brenngaszufuhr wird dann in gleicher Weise über die $\lambda$-Sonde 10 geregelt. Es wird jedoch eine kleinere Menge wegen des durch die $SO_2$-Oxydation verminderten $O_2$-Gehalts

benötigt.

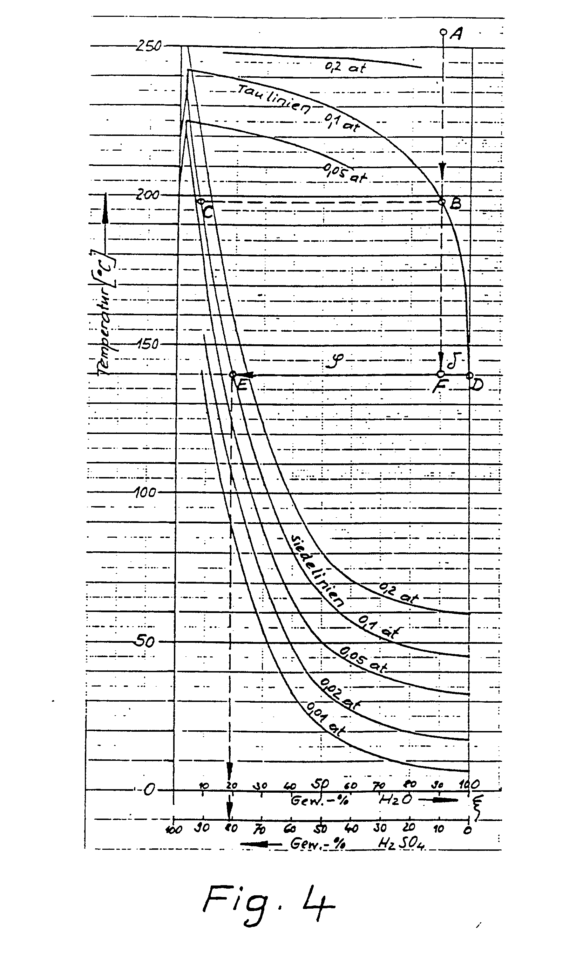

Die Umsetzung des Schwefeltrioxyds aus der katalytischen Schwefeldioxydoxydation läuft sehr rasch und in Anbetracht der hohen Wasserdampfkonzentration vollständig ab. Dabei erhöht sich der Taupunkt mit zunehmender Schwefelsäurekonzentration, wie sich aus den Taulinien des Diagramms der Fig. 4 ergibt. Um nun die druckführenden Heizflächen des Speisewasservorwärmers 38 vor einer Korrosion durch die Schwefelsäure zu bewahren, wird dessen Wassereintrittstemperatur stets oberhalb des Taupunkts gehalten, so daß ein Auskondensieren der Schwefelsäure nicht möglich ist. Die Wassereintrittstemperatur läßt sich dabei durch Zumischen von Heißwasser aus dem Speisewasservorwärmer 28 der ersten Feuerungsanlage 1 einstellen. Sofern die Temperatur des Heißwassers nicht hoch genug ist, kann ein Teilstrom des Heißwassers aus dem Speisewasservorwärmer 38 über einen besonderen, in der Zeichnung dargestellten Vorwärmer in der Dampftrommel 29 in den Vorwärmer 38 bzw. dessen Zuleitung eingespeist werden. Die Dampftemperatur in der Dampftrommel 29 reichen aus, die betreffende Teilmenge ausreichend weit zu erhitzen.

Die den Speisewasservorwärmer 38 verlassenden Rauchgase werden in der ersten Stufe 15a des zweistufigen Luftvorwärmers zunächst bis zu einer Temperatur oberhalb des Taupunkts und alsdann in der zweiten Stufe 15b bis unter den Taupunkt abgekühlt, um die Schwefelsäure auszukondensieren und über den Schwefelsäureabzug 45 abzuziehen. Besonders geeignet hierfür ist ein Röhrenluftvorwärmer mit senkrecht verlaufenden Rohren und einem Rauchgaseintritt am Kopf der Rohre sowie einer Luftströmung in mehrfachem Kreuz-Gegenstrom von unten nach oben. Die zweite Stufe 15b des Luftvorwärmers besteht im Hinblick auf die Gefahr einer Korrosion durch die auskondensierte Schwefelsäure aus einem säurefesten Werkstoff, beispielsweise aus Glasrohren.

Das Auskondensieren der Schwefelsäure in der zweiten Stufe 15b des Luftvorwärmers verläuft etwa entsprechend den druckabhängigen Tau- und Siedelinien des Diagramms der Fig. 4.

Als Beispiel ist im Diagramm der Fig. 4 die Schwefelsäurekondensation bei einem Partialdruck der Gemischkomponenten $H_2O/H_2SO_4$ von 0,1 at und einer Anfangszusammensetzung $\xi_A$ = 90/10 Gew.-% eingetragen.

Der Gemischdampf vom Zustand bei A kühlt sich mit $\xi_A$ = konst. so lange ab, bis die Tautemperatur $t_2$ im Punkt B erreicht ist. In diesem Augenblick kondensieren die ersten Tropfen mit der Zusammensetzung $\xi_C$ im Punkt C (8/92 %). Der Gemischdampf wird dadurch ärmer an $H_2SO_4$, so daß sich bei weiterer Kühlung seine Zusammensetzung längs der Taulinie bis zu dem Punkt D ändert. Im Punkt D ist praktisch die gesamte Schwefelsäure kondensiert, d.h. bei 140° C befindet sich praktisch nur noch Wasserdampf in den Rauchgasen.

Das Kondensat ändert seine Zusammensetzung entlang der Siedelinie für 0,1 at vom Punkt C nach Punkt E. Der im Punkt F zuletzt kondensierte Dampf besitzt die Zusammensetzung $\xi_D$, ist also praktisch reines Wasser. Das im Punkt E anfallende Gemisch besteht aus etwa 81 Gew.-% $H_2SO_4$ und 19 Gew.-% $H_2O$. Das heißt, daß die Rauchgase wasserdampfärmer geworden sind, da auch ein Teil des Wasserdampfes des Rauchgases kondensiert wurde.

Aus der Temperatur von 140° C im Punkt F ließe sich der Anteil der kondensierten Mengen bestimmen. Von 1 kg des Ausgangsgemisches sind δ (kg/kg) kondensiert und verbleiben φ (kg/kg) als Dampf, d.h.

$$\delta + \varphi = 1$$

Da die $H_2SO_4$-Menge vor und während der Kondensation erhalten bleibt, ist

$$\xi_1 = \xi_4 = \varphi \cdot \xi_6 + \varphi \cdot \xi_5$$

bzw. $\varphi = \frac{\xi_4 - \xi_5}{\xi_6 - \xi_5}$ und $\varphi = \frac{\xi_6 - \xi_4}{\xi_6 - \xi_5}$

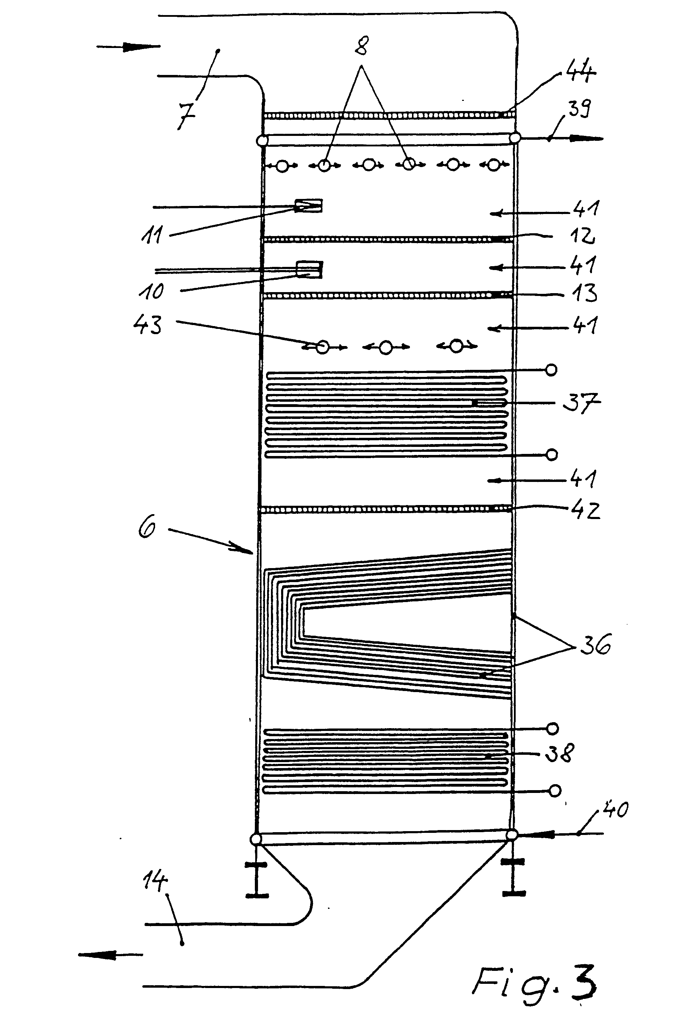

Demgemäß sind entsprechend Punkt F im Diagramm der Fig. 3

$$\delta = \frac{90 - 100}{19 - 100} = 0,1235 \text{ (kg/kg) kondensiert}$$

und bleiben $\varphi = \frac{19 - 90}{19 - 100} = 0,8765$ (kg/kg) dampfförmig.

Das Kondensat besteht zu 19 Gew.-% aus $H_2O$, d.h. es wurden

$$0,19 \cdot 0,1235 = 0,0235 \left(\frac{kg\ H_2O}{kg\ (H_2O + H_2SO_4)}\right)$$

und $0,81 \cdot 0,1235 = 0,1000 \left(\frac{kg\ H_2O}{kg\ (H_2O + H_2SO_4)}\right)$

kondensiert.

Die Anwendung des erfindungsgemäßen Verfahrens auf eine Dampfkraftwerksanlage ist in Fig. 2 im einzelnen dargestellt. Die erste Feuerungsanlage wird durch ein Kesselteil 1 gebildet mit einer Kohlenstaubzufuhr 2 zur Brennkammer dieses Kesselteils 1. Der Kesselteil 1 ist in üblicher Weise mit Verdampferheizflächen 26, Überhitzerheizflächen 27 und Speisewasservorwärmerheizflächen 28 versehen. Oberhalb des Kesselteils 1 befindet sich eine Dampftrommel 29. Die Rauchgase werden aus dem Kesselteil 1 über den Rauchgaskanal 4 abgeführt. Eine Bypass-Regelklappe 30 für die Rauchgase erlaubt es, einen Teil der Rauchgase im Bereich zwischen den Überhitzerheizflächen 27 und den Speisewasservorwärmerheizflächen 28 in den Rauchgaskanal 4 zu leiten. Eine Rauchgasregelklappe 31 ist zu diesem Zwecke zusätzlich im Rauchgaskanal 4 vor der Einmündung der durch die Bypass-Regelklappe 30 strömenden Rauchgase angeordnet.

Die als Brennstoff benötigte Kohle wird über eine Bekohlungsanlage 32 einem Kohlebunker 33 zugeführt. Von diesem Kohlebunker 33 gelangt die Kohle in der jeweils benötigten Menge über Zuteiler 34 in Mühlen 35, von wo die Kohle als Kohlenstaub in die Kohlenstaubzufuhr 2 gelangt. Im Rauchgaskanal 4 sind die Rauchgase auf etwa 330° C abgekühlt und durchströmen den als Elektrofilter ausgebildeten Entstauber 5. Im Elektrofilter 5 wird der Flugstaub abgeschieden bis auf einen Reingasstaubgehalt von maximal 50 mg/Nm$^3$. Vom Elektrofilter 5 gelangen die Rauchgase durch einen Rauchgaskanal 7 in einen zweiten Kesselteil 6, der die zweite Feuerungsanlage für die zweistufige Verbrennung enthält. Den Rauchgasen wird das Brenngas über die Brenngaszufuhr 8 in Form von über den gesamten Eintrittsquerschnitt des Kesselteiles 6 angeordneten Verteilerrohren so zugeführt, daß eine gründliche Durchmischung der Rauchgase und des Brenngases erfolgt. Die zugeführte Brenngasmenge wird so geregelt, daß eine stöchiometrische Mischung mit dem Rauchgas erreicht wird. Dieses Gemisch verbrennt katalytisch beim Durchströmen des Oxydationskatalysators 12, wobei die Gastemperatur auf 680° C steigt, wenn als Brenngas Erdgas verwendet wird und der Restsauerstoffgehalt im vom ersten Kesselteil 1 kommenden Rauchgas 3 % beträgt.

Bei diesen Temperaturen findet eine vollständige Umsetzung der einzelnen Gaskomponenten am aus Platin und Palladium bestehenden Oxydationskatalysator statt. Die Umsetzungstemperaturen sind für die einzelnen Gaskomponenten die folgenden:

$H_2$ bei unter 100° C, CO bei 20° bis 200° C, $C_2 H_2$ bei 140° bis 240° C, $C_2H_4$ bei 175° bis 300° C usw. Selbst das am schwersten umzusetzende $CH_4$ wird im Bereich von 300° bis 450° vollständig umgesetzt.

Am Austritt des Oxydationskatalysators 12 erfüllt das Rauchgas die Bedingungen, um im nachgeschalteten multifunktionellen Platin-Rhodium-Dreiwegkatalysator 13 behandelt zu werden. Hier werden gleichzeitig alle 3 Schadstoffkomponenten - unverbrannte Kohlenwasserstoffe, Kohlenmonoxyd und Stickoxyde - in $CO_2$, $H_2O$ und $N_2$ verwandelt. Der multifunktionelle Katalysator 13 bewirkt somit eine Oxydation der unverbrannten Kohlenwasserstoffe und des Kohlenmonoxyds und eine Reduktion der Stickoxyde zu $N_2$.

Falls erforderlich, kann zur Einleitung der Zündung vor dem Oxydationskatalysator 12, der an sich ein hervorragendes Anspringen und gutes Dauerstandverhalten aufweist, eine Zündhilfe in Form eines Zündbrenners 11 vorgesehen sein. Die Notwendigkeit eines solchen Zündbrenners 11 hängt von der Rauchgastemperatur am Austritt des Kesselteils 1 ab. Diese Rauchgastemperatur kann durch kessel-interne Maßnahmen, z. B. über eine Bypass-Regelung mittels der Bypass-Regelklappe 30 und der Rauchgasregelklappe 31 über den gesamten Lastbereich auf die niedrigst zulässige Temperatur eingeregelt werden. Der Temperaturanstieg der Rauchgase im Oxydationskatalysator 12 wird weiterhin durch den Restsauerstoffgehalt im Rauchgas, d.h. durch den Luftüberschuß beim Betrieb des ersten Kesselteiles 1 beeinflußt.

Wie in Fig. 1 und 3 dargestellt, befindet sich der Oxydationskatalysator 42 bzw. 44 für das Schwefeldioxyd entweder hinter den Überhitzerheizflächen oder vor der Brenngaszufuhr 8. Das Rauchgas wird nun im Kesselteil 6 mit Verdampferheizflächen 36, Überhitzerheizflächen 37 und Speisewasservorwärmerheizflächen 38 auf die prozeßintern gewünschte Rauchgastemperatur vor dem Eintritt in den Luftvorwärmer 15 abgekühlt. Der Kesselteil 6 ist über eine Dampfleitung 39 mit der Dampftrommel 29 und über eine Siedewasserleitung 40 mit einer nicht dargestellten Falleitung zur Dampftrommel 29 verbunden.

Über den Rauchgaskanal 14 gelangen die Rauchgase durch den Luftvorwärmer 15a, 15b hindurch, wo die Schwefelsäure auskondensiert wird und treten aus diesem den Rauchgaskanal 19 ein, und werden mittels des Saugzuggebläses 20 und eines Rauchgaskanals 23 in den Kamin 25 gefördert.

Die vom Frischluftgebläse 16 geförderte Frischluft tritt in den Luftvorwärmer 15 mit etwa 45° C ein und wird im Luftvorwärmer 15 auf ca. 320° C erwärmt. Der größte Teil der durch den Luftvorwärmer 15 geförderten Frischluft gelangt über den Verbrennungsluftkanal 17 in die Brennkammer des ersten Kesselteils 1, während gegebenenfalls ein kleiner Teil der erwärmten Frischluft über den Mischluftkanal 43 zum Rauchgaskanal 23 hinter dem Reduktionskatalysator 13 gefördert wird, um dort den Sauerstoffgehalt des Rauchgases auf einen für die Schwefeldioxydoxydation nötigen Wert einzustellen. Die Abkühlung der Rauchgase im Luftvorwärmer 15 auf etwa 90° C ist durchführbar, ohne daß die gefürchteten Verkrustungen auftreten, da die Rauchgase praktisch staubfrei sind.

Bei der erfindungsgemäßen Entschwefelung wird die Schwefelsäure praktisch vollständig auskondensiert.

Als Entsorgungsprodukt fällt zusätzlich zu der Filter- und Kesseltrichterasche in der zweiten Stufe 15b des Luftvorwärmers noch eine etwa 80 %-ige Schwefelsäure an. Bei einem 150 t/h-Kessel und 1 % Schwefel in der Kohle fallen etwa 400 kg Schwefelsäure pro Stunde an bzw. bei 8.000 Jahresvollaststunden 3.200 t pro Jahr.

Die erfindungsgemäße Schwefeldioxydoxydation ergibt nicht nur ein umweltverträgliches Rauchgas sondern erhöht auch die thermische Leistung der Anlage; denn sie ist exotherm und ergibt bei einem Steinkohleheizwert von 25140 [kJ/kg] (6000 kcal/kg) und 1 % Schwefel eine Wärmetönung von 7,18 30,1 [kJ/kg] (kcal/kg) Kohle bzw. 0,12 %, bezogen auf deren Heizwert.

EP 0 132 584 B1

**Patentansprüche**

1. Verfahren zum Vermindern der Schadstoffemissionen im Rauchgas von Feuerungsanlagen mit Wärmetauschern durch Verbrennen von schwefel- und aschehaltigem Brennstoff mit Luftüberschuß und Erzeugen von etwa 85 % der erforderlichen Leistung in einer ersten Stufe und Verbrennen eines aschefreien und gegebenenfalls schwefelhaltigen Brennstoffs im stöchiometrischen Bereich mit dem Restsauerstoff des Rauchgases der ersten Stufe und Erzeugen des Rests der thermischen Leistung in einer zweiten, nachgeordneten Stufe und durch katalytische Umwandlung der Schwefeloxyde sowie der Stickoxyde in unschädliche und/oder entsorgbare Verbindungen nach einer Entstaubung der Rauchgase, dadurch gekennzeichnet, daß das Entstauben nach der ersten Stufe erfolgt, daß die Verbrennung in der zweiten Stufe, durch einen Oxydationskatalysator (12), katalytisch erfolgt und sich daran eine katalytische Reduktion, durch einen Reduktionskatalysator (13), der Stickoxyde zu Stickstoff anschließt, daß nach dem Entstauben eine weitere katalytische Aufoxydation des Schwefeldioxyds zu Schwefeltrioxyd erfolgt, wobei der weitere Katalysator (42 bzw. 44) an einer Stelle im Rauchgasstrom angeordnet ist, wo eine Temperatur von 400° bis 500°C herrscht und daß Schwefelsäure vor dem Eintritt in einen Kamin durch Kühlen der Rauchgase bis unter den Taupunkt auskondensiert und abgezogen wird.

2. Verfahren nach Anspruch 1, dadurch gekennzeichnet, daß die Brennstoffzufuhr in der ersten Stufe bei im wesentlichen gleichbleibendem Luftüberschuß in Abhängigkeit von der benötigten Leistung und die Brennstoffzufuhr in der zweiten Stufe in Abhängigkeit vom Sauerstoffgehalt im Rauchgas geregelt wird.

3. Verfahren nach Anspruch 2, dadurch gekennzeichnet, daß die Brennstoffzufuhr in der zweiten Stufe in Abhängigkeit vom Sauerstoffgehalt des Rauchgases nach der zweiten Stufe geregelt wird.

4. Verfahren nach Anspruch 1, 2 oder 3, dadurch gekennzeichnet, daß das Schwefeldioxyd der Rauchgase vor der Nachverbrennung in der zweiten Stufe zu Schwefeltrioxyd aufoxydiert wird.

5. Verfahren nach Anspruch 1, 2 oder 3, dadurch gekennzeichnet, daß das Schwefeldioxyd nach der Stickoxydreduktionsstufe zu Schwefeltrioxyd aufoxydiert wird.

6. Verfahren nach Anspruch 3, dadurch gekennzeichnet, daß vor der Schwefeldioxydoxydation Sauerstoff in das Rauchgas eingespeist wird.

7. Verfahren nach einem der Ansprüche 1 bis 6, dadurch gekennzeichnet, daß die Wassereintrittstemperatur eines Speisewasservorwärmers am kalten Ende der zweiten Feuerungsanlage oberhalb des Taupunkts der Rauchgase liegt.

8. Verfahren nach Anspruch 7, dadurch gekennzeichnet, daß Heißwasser aus einem Speisewasservorwärmer am kalten Ende der ersten Feuerungsanlage in die Zuleitung des Speisewasservorwärmers der zweiten Feuerungsanlage eingespeist wird.

9. Verfahren nach Anspruch 8, dadurch gekennzeichnet, daß ein Teilstrom des Heißwassers über einen in einer Dampftrommel angeordneten Vorwärmer eingespeist wird.

10. Verfahren nach Anspruch 7 oder 8, dadurch gekennzeichnet, daß die den Speisewasservorwärmer der zweiten Feuerungsanlage verlassenden Rauchgase in einem rekuperativen Luftvorwärmer abgekühlt werden.

11. Verfahren nach Anspruch 10, gekennzeichnet durch ein zweistufiges Abkühlen in dem Luftvorwärmer mit einer oberhalb des Taupunkts der Rauchgase liegenden heißen und einer unterhalb des Taupunkts liegenden kalten Stufe.

12. Dampfkraftwerk zur Durchführung des Verfahrens nach einem oder mehreren der Ansprüche 1 bis 11 mit einem Dampfkessel aus einer mit Luftüberschuß betriebenen Kohlenstaubfeuerung für den überwiegenden Teil der geforderten Leistung als erster Stufe und einer Zufuhr von gasförmigem oder flüssigem Brennstoff in die Rauchgase der ersten Stufe mit Verbrauch des Restsauerstoffs in den Rauchgasen für den Rest der geforderten Leistung als zweiter Stufe, Strahlungsheizflächen, Berührungsheizflächen, einem Luftvorwärmer, einem Entstauber und einem vor dem Luftvorwärmer angeordneten Katalysator zum Umwandeln von Schwefeloxyden und Stickoxyden in unschädliche und/oder entsorgbare Verbindungen und mit einer Vorrichtung zum Abtrennen der gebildeten Schwefelverbindungen aus den Rauchgasen, dadurch gekennzeichnet, daß die erste Stufe aus einem ersten Kesselteil (1) mit Verdampferheizflächen (26), Überhitzerheizflächen (27), Speisewasservorwärmerheizflächen (28) und einer vom Dampfdruck abhängigen Regelvorrichtung (3) für die Kohlenstaubzufuhr (2) sowie die zweite Stufe aus einem zweiten Kesselteil (6) mit Verdampferheizflächen (36), Überhitzerheizflächen (37), Speisewasservorwärmerheizflächen (38) und einer vom Sauerstoffgehalt der Rauchgase abhängigen Regelvorrichtung (9) für die Brennstoffzufuhr (8) bestehen, der Entstauber (5) zwischen dem ersten Kesselteil (1) und dem zweiten Kesselteil (6) angeordnet ist, die Verbrennung in der zweiten Stufe an einem nach der Brennstoffzufuhr (8) angeordneten Oxydationskatalysator (12) und die Reduktion der Stickoxyde an einem nach dem Oxydationskatalysator (12) angeordneten Reduktionskatalysator (13) erfolgen, daß ein weiterer Oxydationskatalysator (42 bzw. 44) für Schwefeldioxyd nach dem Entstauber (5) angeordnet ist und daß der Luftvorwärmer (15a, 15b) einen Schwefelsäureabzug (45) aufweist.

## Claims

1. A process for reducing the emission of pollutants in the flue gas of furnace plants having heat exchangers by burning fuel containing sulphur and ash with an excess of air and by producing about 85 % of the necessary power in a first stage and burning an ash-free fuel, possibly containing sulphur in the stoichiometric region with the residual oxygen of the flue gas from the first stage and by producing the rest of the thermal power in a second, subsequent stage, and by catalytic conversion of the oxides of sulphur and nitrogen into harmless and/or disposable compounds after the removal of dust from the flue gases, characterised in that the removal of dust is effected after the first stage; that combustion is effected catalytically in the second stage by means of an oxidation catalyst (12); that this is followed by catalytic reduction of the nitrogen oxides to nitrogen by means of a reduction catalyst (13); that after the removal of dust a further catalytic oxidation of the sulphur dioxide to sulphur trioxide is effected, the further catalyst (42 or 44) being arranged at a point in the flue gas stream where a temperature of 400° to 500°C prevails; and that sulphuric acid is condensed to below the dew point and is removed by cooling the flue gases before entering a chimney.

2. A process according to claim 1, characterised in that the fuel supply is controlled in the first stage, with substantially constant excess of air, depending on the power required and the fuel supply in the second stage is controlled depending on the oxygen contained in the flue gas.

3. A process according to claim 2, characterised in that the fuel supply in the second stage controlled depending on the oxygen contained in the flue gas after the first stage.

4. A process according to any one of claims 1, 2 or 3, characterised in that the sulphur dioxide in the flue gases is oxidised to sulphur trioxide before after-burning in the second stage.

5. A process according to any one of claims 1, 2 or 3, characterised in that the sulphur dioxide oxidised to sulphur trioxide after the nitrogen oxide reduction stage.

6. A process according to claim 5, characterised in that before the sulphur dioxide oxidation oxygen fed into the flue gas.

7. A process according to any one of claims 1 to 6, characterised in that the water inlet temperature of a feed water pre-heater at the cold end of the second furnace plant lies above the dew point of the flue gases.

8. A process according to claim 7, characterised in that hot water from a feed water pre-heater at the cold end of the first furnace plant is fed into the inlet of the feed water pre-heater of the second furnace plant.

9. A process according to claim 8, characterised in that part of the hot water is supplied by way of a pre-heater arranged in a steam drum.

10. A process according to claim 7 or claim 8, characterised in that the flue gases leaving the feed water pre-heater of the second furnace plant are cooled in a recuperative air pre-heater.

11. A process according to claim 10, characterised by two-stage cooling in the air pre-heater having a hot stage lying above the dew point of the flue gases and a cold stage lying below the dew point.

12. A steam power station for carrying out the process according to one or more of claims 1 to 11 having a steam boiler comprising as a first stage a coal dust furnace operated with an excess of air for the major part of the power required and as a second stage a supply of gaseous or fluid fuel into the flue gases of the first stage using the residual oxygen in the flue gases for the rest of the power required, radiation heating surfaces, contact heating surfaces, an air pre-heater, a dust remover and a catalytic converter arranged before the air pre-heater to convert oxides of sulphur and nitrogen into harmless and/or disposable compounds and having a device to separate the sulphur compounds formed from the flue gases, characterised in that the first stage comprises a first boiler part (1) having evaporator heating surfaces (26), superheater heating surfaces (27), feed water pre-heater heating surfaces (28) and a steam-pressure-dependent regulating device (3) for the coal dust feed (2); the second stage comprises a second boiler part (6) having evaporator heating surfaces (36), superheater heating surfaces (37), feed water pre-heater heating surfaces (38) and a regulating device (9) for the fuel supply (8) depending on the oxygen content in the flue gases; the dust remover (5) is arranged between the first boiler part (1) and the second boiler part (6); combustion in the second stage occurs at an oxidation catalyst (12) arranged after the fuel supply (8) and reduction of the nitrogen oxides occurs at a reduction catalyst (13) arranged after the oxidation catalyst (12); that a further oxidation catalytic converter (42 or 44) for sulphur dioxide arranged after the dust remover (5); and that the air preheater (15a, 15b) has a sulphuric acid outlet (45).

## Revendications

1. Procédé permettant de diminuer les émissions de substances nocives dans les fumées provenant d'installations de chauffage qui comportent des échangeurs de chaleur et consistant à brûler un combustible contenant du souffre et des cendres avec un excès d'air en produisant 85 % environ de l'énergie requise dans un premier étage et à brûler un combustible ne contenant pas de cendres, mais pouvant contenir du soufre, en proportions stoechiométriques avec l'oxygène résiduel des fumées provenant du premier étage, en produisant le reste de l'énergie thermique dans un deuxième étage placé à la suite et à transformer par catalyse les oxydes de soufre et les oxydes d'azote en composés inoffensifs et/ou utilisables après un dépoussiérage des fumées, caractérisé en ce que le dépoussiérage s'effectue après le premier étage, en ce que la combustion du deuxième étage s'effectue par catalyse, au moyen d'un catalyseur d'oxydation (12), et est suivie d'une réduction par catalyse, au moyen d'un catalyseur de réduction, (13) qui réduit les oxydes d'azote à l'état d'azote, en ce que le dépoussiérage est suivi d'une autre oxydation par catalyse transformant le bioxyde de soufre en trioxyde de soufre, le catalyseur correspondant (42 ou 44) étant placé, dans le courant de fumées, à un emplacement où règne une température de 400° à 500°C et en ce que l'acide sulfurique est, en avant de l'entrée dans une cheminée, condensé par refroidissement des fumées au-dessous du point de rosée et évacué.

2. Procédé selon la revendication 1, caractérisé en ce que l'apport de combustible dans le premier étage est, pour une valeur sensiblement constante de l'excès d'air, réglé en fonction de l'énergie requise et que l'apport de combustible dans le deuxième étage est réglé en fonction de la teneur en oxygène des fumées.

3. Procédé selon la revendication 2, caractérisé en ce que l'apport de combustible dans le deuxième étage est réglé en fonction de la teneur en oxygène des fumées après le deuxième étage.

4. Procédé selon l'une des revendications 1, 2 ou 3, caractérisé en ce que le bioxyde de soufre contenu dans les fumées est, avant la combustion suivante, oxydé dans le deuxième étage à l'état de trioxyde de soufre.

5. Procédé selon l'une des revendications 1, 2 ou 3, caractérisé en ce qu'après l'étage de réduction des oxydes d'azote le bioxyde de soufre est oxydé à l'état de trioxyde de soufre.

6. Procédé selon la revendication 5, caractérisé en ce qu'avant l'oxydation du bioxyde de soufre de l'oxygène est introduit dans les fumées.

7. Procédé selon l'une des revendications 1 à 6, caractérisé en ce que la température d'entrée de l'eau dans un préchauffeur d'eau d'alimentation se situe à l'extrémité froide de la deuxième installation de chauffage, au-dessus du point de rosée de fumées.

8. Procédé selon la revendication 7, caractérisé en ce que l'eau chaude provenant d'un préchauffeur d'eau d'alimentation est introduite à l'extrémité froide de la première installation de chauffage dans la canalisation d'amenée du préchauffeur d'eau d'alimentation de la deuxième installation de chauffage.

9. Procédé selon la revendication 8, caractérisé en ce qu'une partie du courant d'eau chaude est introduite en passant par un préchauffeur monté dans un tambour à vapeur.

10. Procédé selon l'une des revendications 7 ou 8, caractérisé en ce que les fumées qui sortent du préchauffeur d'eau d'alimentation de la deuxième installation de chauffage sont refroidies dans un préchauffeur d'air de récupération.

11. Procédé selon la revendication 10, caractérisé par un refroidissement en deux étages dans le préchauffeur d'air qui comporte un étage chaud à une température supérieure au point de rosée des fumées et un étage froid à une température inférieure à ce point de rosée.

12. Usine d'énergie à vapeur pour l'application du procédé selon une ou plusieurs des revendications 1 à 11, qui comprend une chaudière à vapeur d'une installation de chauffage au poussier de charbon qui marche avec un excès d'air pour la production de la plus grande partie de l'énergie requise et qui constitue le premier étage et un dispositif d'introduction du combustible gazeux ou liquide dans les fumées du premier étage qui assure l'utilisation de l'oxygène résiduel des fumées pour la production du reste de l'energie requise et qui constitue le deuxième étage, des surfaces chauffantes par rayonnement, des surfaces chauffantes par contact, un préchauffeur d'air, une station de dépoussiérage et un catalyseur placé en avant du préchauffeur d'air pour la transformation des oxydes de soufre et des oxydes d'azote en composés inoffensifs et/ou utilisables et un dispositif pour la séparation des composés du soufre formés d'avec les fumées, caractérisée en ce que le premier étage est constitué par une première partie de chaudière (1) comportant des surfaces chauffantes (26) d'évaporateur, des surfaces chauffantes (27) de surchauffeur, des surfaces chauffantes (28) de préchauffeur d'eau d'alimentation et un dispositif (3) de réglage d'amenée de poussier de charbon suivant la pression de vapeur, que le deuxième étage est constitué par une deuxième partie de chaudière (6) comportant des surfaces chauffantes (36) d'évaporateur, des surfaces chauffantes (37) de surchauffeur, des surfaces chauffantes (38) de préchauffeur d'eau d'alimentation et un dispositif de réglage (9) de l'amenée (8) de combustible en fonction de la teneur en oxygène des fumées, en ce que la station de dépoussiérage (5) est intercalée entre la première partie de chaudière (1) et la deuxième partie de chaudière (6), en ce que la combustion dans le deuxième étage s'effectue au niveau d'un catalyseur d'oxydation (12) placé après l'arrivée (8) du combustible et que la réduction des oxydes d'azote s'effectue au niveau d'un catalyseur de réduction (13) placé après le catalyseur d'oxydation (12), en ce qu'un autre catalyseur d'oxydation (42 ou 44) du bioxyde de soufre est placé après la station de dépoussiérage (5) et en ce que le préchauffeur d'air (15a, 15b) comporte un dispositif (45) assurant l'évacuation de l'acide sulfurique.

Fig.1

Fig. 2

Fig. 3

Fig. 4